# FASCICULE DE BREVET EUROPEEN

(11) **EP 3 347 572 B1**
(45) Date de publication et mention de la délivrance du brevet: **06.11.2019**
(21) Numéro de dépôt: 16767331.8
(22) Date de dépôt: 05.09.2016
(51) Int. Cl.: F01D 25/24, F01D 9/04

(54) **TURBINE DE TURBOMACHINE COMPRENANT UN ÉTAGE DISTRIBUTEUR EN MATÉRIAU COMPOSITE À MATRICE CÉRAMIQUE**
TURBINE EINES TURBINENTRIEBWERKS MIT EINER STATORSTUFE AUS KERAMISCHEM MATRIXVERBUNDWERKSTOFF
TURBINE OF A TURBINE ENGINE COMPRISING A DISTRIBUTOR STAGE MADE FROM CERAMIC MATRIX COMPOSITE MATERIAL

(30) Priorité: 09.09.2015 FR 1558366
(43) Date de publication de la demande: 18.07.2018
(73) Titulaire: Safran Aircraft Engines, 75015 Paris (FR)
(72) Inventeur: QUENNEHEN, Lucien, Henri, Jacques, 77550 Moissy-cramayel Cedex (FR)
(74) Mandataire: Cabinet Beau de Loménie
(86) Numéro de dépôt international: PCT/FR2016/052193
(87) Numéro de publication internationale: WO 2017/042461

(56) Documents cités:
- FR-A1- 2 979 662
- US-A1- 2008 279 679
- US-A1- 2014 004 293

## Description

### Arrière-plan de l'invention

L'invention concerne des turbomachines, notamment des turbomoteurs aéronautiques ou des turbines industrielles, et plus particulièrement un étage distributeur de turbine en matériau composite à matrice céramique ou à matrice au moins partiellement en céramique, désigné ci-après par matériau CMC.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique. Les matériaux CMC sont typiquement formés d'un renfort fibreux en fibres réfractaires, telles que des fibres de carbone ou de céramique, densifié par une matrice en céramique ou au moins partiellement en céramique.

Ces matériaux possèdent des propriétés thermo-structurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décriveht la réalisation d'aubes de roues mobiles de turbomachines en CMC à plate-forme et talon intégrés. L'utilisation de matériaux CMC pour des distributeurs de turbine a aussi été proposée, notamment dans les documents WO 2010/146288, FR 2 979 662 et EP 2 443 318.

Un étage distributeur de turbine métallique traditionnel présente une forme de couronne composée de plusieurs secteurs assemblés, chaque secteur comprenant une plate-forme intérieure, une plateforme extérieure et une pluralité de pales s'étendant entre les plateformes intérieure et extérieure et solidaires de celles-ci. Les plateformes intérieures juxtaposées forment une virole intérieure et les plateformes extérieures juxtaposées forment une virole extérieure. Les viroles intérieure et extérieure délimitent la veine d'écoulement de gaz dans l'étage distributeur.

Introduire un étage distributeur, par exemple un étage distributeur haute pression, en CMC permet d'augmenter la température maximale tolérée par rapport à un étage distributeur métallique, et ainsi de diminuer la quantité d'air de refroidissement utilisée. Cela permet ainsi d'augmenter les performances de la turbomachine.

Toutefois, le CMC, par ses propriétés très différentes du métal est plus sensible à certaines contraintes mécaniques. En effet le CMC présente une plus grande rigidité et une plus faible dilatation, mais aussi des contraintes admissibles en traction plus faibles.

De plus, l'intégration dans un environnement métallique d'une pièce en CMC est délicate en raison des dilatations thermiques différentielles entre le CMC et le métal. Cela est d'autant plus délicat dans une turbomachine, et plus particulièrement dans une partie à haute pression de la turbomachine, car l'environnement est très chaud, ce qui exacerbe les différences de coefficients de dilatation thermique entre les matériaux, les efforts aérodynamiques subis par un étage distributeur haute pression étant en outre très élevés dans cette zone de turbine.

### Objet et résumé de l'invention

L'invention vise à pallier les inconvénients ci-dessus et à passer outre les difficultés mentionnées ci-dessus en proposant une turbine de turbomachine comprenant un étage distributeur de turbine en CMC dont le montage est simplifié et adapté pour fournir un ensemble rigide avec une étanchéité améliorée.

L'invention a pour objet une turbine de turbomachine comprenant un carter, un étage distributeur de turbine et un anneau métallique support de matériau abradable, l'étage distributeur de turbine étant en matériau composite à matrice céramique et comprenant une pluralité de secteurs annulaires formant une couronne présentant une virole intérieure, une virole extérieure, chaque secteur annulaire ayant une plateforme intérieure formant une partie de la virole intérieure, une plateforme extérieure formant une partie de la virole extérieure, et au moins une pale s'étendant entre la plateforme extérieure et la plateforme intérieure et solidaire de celles-ci, et l'anneau métallique comprenant au moins un secteur au moins partiellement annulaire.

Selon une caractéristique générale de l'invention, l'anneau métallique présente une surface externe en contact avec la surface de la virole intérieure de l'étage distributeur opposée à la surface depuis laquelle s'étend les pales, l'anneau métallique présentant à sa surface externe un diamètre externe supérieur au diamètre de la virole intérieure de l'étage distributeur de turbine de sorte que l'étage distributeur soit maintenu en compression entre le carter et l'anneau métallique.

Le surdimensionnement du diamètre, ou du rayon, de la surface externe, c'est-à-dire de la surface périphérique extérieure de l'anneau métallique, par rapport au diamètre, ou au rayon, de la surface périphérique intérieure de la virole intérieure de l'étage distributeur permet d'enserrer la couronne formée par l'étage distributeur entre le carter et l'anneau métallique et ainsi de maintenir l'étage distributeur en position par compression entre le carter et l'anneau métallique.

Cela permet ainsi d'exploiter les propriétés spécifiques au CMC, notamment la bonne résistance en compression d'éléments en CMC, en faisant travailler la majorité du distributeur en CMC en compression.

En outre, cette configuration minimisant le nombre de pièces utilisées et le nombre de contacts entre les différentes pièces permet d'améliorer l'étanchéité et d'alléger l'ensemble formé par l'étage distributeur et l'anneau métallique à l'intérieur du carter.

L'étanchéité est d'autant plus améliorée que l'anneau métallique présente un diamètre interne, c'est-à-dire le diamètre de la surface périphérique intérieure, petit. En effet, en réduisant le diamètre interne de l'anneau métallique, on diminue la surface à étanchéifier et on réduit ainsi le risque d'apparition de fuite.

Lors du montage de la turbine, l'anneau métallique est refroidi pour réduire son diamètre avant d'être inséré et mis en position à l'intérieur de la couronne formée par les secteurs annulaires de l'étage distributeur. Une fois aligné dans le plan dans lequel s'étend l'étage distributeur, l'anneau métallique est remis à température ambiante de manière à récupérer le diamètre d'origine et à exercer une force radiale dirigée vers le carter sur l'étage distributeur pour le maintenir en position.

Selon un deuxième aspect de la turbine de turbomachine, la virole extérieure peut comprendre une nervure annulaire comportant au moins un créneau et s'étendant sur une surface de la virole extérieure en regard du carter, et le carter comprend au moins une dent s'étendant en saillie depuis une surface circonférentielle intérieure du carter vers l'étage distributeur et disposée en regard d'un créneau de la nervure annulaire de l'étage distributeur de sorte que ladite au moins une dent du carter coopère avec ledit au moins un créneau de la nervure annulaire de l'étage distributeur pour bloquer en rotation la couronne de distribution formée par l'étage distributeur.

La nervure annulaire crénelée fournit ainsi un moyen d'empêcher toute rotation de l'étage distributeur.

Selon un troisième aspect de la turbine de turbomachine, le carter peut comprendre en outre un épaulement en saillie vers l'étage distributeur, l'épaulement du carter et la nervure annulaire de la virole extérieure de l'étage distributeur étant dimensionnés pour que l'épaulement du carter forme une butée contre laquelle la nervure s'appuie.

L'épaulement du carter peut ainsi coopérer avec la nervure annulaire de l'étage distributeur pour fournir une butée axiale dans un premier sens de la direction axiale à l'étage distributeur.

Selon un quatrième aspect de la turbine de turbomachine, la turbine comprend une veine d'écoulement formée par le passage entre la virole extérieure et la virole intérieure de l'étage distributeur et à l'intérieur de laquelle s'écoule un flux gazeux dans un sens d'écoulement, une surface intérieure de ladite virole intérieure et ladite surface externe de l'anneau métallique présentant toutes deux une pente négative dans le sens d'écoulement du flux gazeux.

La coopération de la pente négative prévue sur la surface externe de l'anneau métallique avec celle que présente la surface intérieure de la virole intérieure de l'étage distributeur permet de fournir une butée axiale à l'anneau métallique dans un second sens de la direction axiale à l'étage distributeur. Le second sens est opposé au premier sens de la direction axiale au distributeur. Le premier sens correspond au sens d'écoulement du flux gazeux, et le second sens correspond au sens opposé à l'écoulement du flux gazeux.

Dans une configuration où l'épaulement du carter est configuré pour former une butée axiale dans le second sens de la direction axiale de l'étage distributeur, la surface intérieure de la virole intérieure et la surface externe de l'anneau métallique peuvent présenter une pente positive dans le sens d'écoulement du flux gazeux, c'est-à-dire une pente négative dans le sens opposé à l'écoulement du flux gazeux, de manière à former une butée axiale dans le premier sens de la direction axiale de l'étage distributeur.

Dans une autre configuration encore dans laquelle la turbine comprend d'autres éléments pour former des butées axiales dans les deux sens axiaux de la turbine, la surface intérieure de la virole intérieure et la surface externe de l'anneau métallique peuvent présenter une pente nulle.

Selon un cinquième aspect de la turbine de turbomachine, la virole intérieure de l'étage distributeur peut présenter un orifice ou une encoche et l'anneau métallique comprend un ergot en saillie de la surface externe de l'anneau métallique apte à coopérer avec l'encoche ou l'orifice de la virole intérieure de l'étage distributeur, l'ergot étant formé par une clavette ou un pion ou une vis formant un pion en saillie de la surface externe.

L'ergot prévu sur l'anneau métallique coopérant avec l'orifice prévu sur la virole intérieure de l'étage distributeur permet d'une part de fournir une butée axiale à l'anneau métallique et, d'autre part, de fournir un moyen de blocage en rotation de l'anneau métallique.

Selon un sixième aspect de la turbine de turbomachine, l'anneau métallique peut présenter une section en forme de I.

La forme de I de la section de l'anneau métallique permet de réduire la masse de l'anneau métallique et ainsi la masse totale de la turbine tout en présentant une grande surface externe en contact avec la virole intérieure de l'étage distributeur et en maintenant un niveau de rigidité élevé de l'anneau métallique et une possibilité de réalisation en une pièce de l'anneau métallique.

Selon un septième aspect de la turbine de turbomachine, la turbine peut comprendre en outre au moins un joint, tel qu'un joint tressé ou un joint fil, disposé entre la virole intérieure de l'étage distributeur et la surface externe de l'anneau métallique.

Le joint permet ainsi d'améliorer l'étanchéité entre l'anneau métallique et l'étage distributeur en CMC, notamment dans un environnement chaud dans lequel le décambrage entre le distributeur CMC et l'anneau métallique et entre l'étage distributeur CMC et carter risquent d'ouvrir des sections de fuite.

Selon un huitième aspect de la turbine de turbomachine, la turbine peut également comprendre au moins un joint, tel qu'un joint tressé ou un joint fil, disposé entre la virole extérieure de l'étage distributeur et la surface intérieure du carter.

Selon un neuvième aspect de la turbine de turbomachine, l'anneau métallique peut être réalisé en une seule pièce.

La réalisation en une seule pièce de l'anneau métallique permet d'éviter tout problème d'alignement entre les différentes sections d'anneau métallique et d'optimiser la déformation radiale uniforme de l'anneau métallique en fonction de la température. Elle permet également de limiter les fuites en ne créant pas des sections de fuite entre différents secteurs d'anneaux métalliques.

L'invention a également pour objet, un turboréacteur comprenant au moins une turbine de turbomachine telle que définie ci-dessus, dans lequel au moins une desdites au moins une turbine est une turbine haute pression ou basse pression.

L'invention a aussi pour autre objet, un aéronef comprenant au moins un turboréacteur tel que défini ci-dessus.

### Brève description des dessins.

L'invention sera mieux comprise à la lecture faite ci-après, à titre indicatif mais non limitatif, en référence aux dessins annexés sur lesquels :
- la figure 1 est une vue schématique en coupe d'une portion d'une turbine de turbomachine selon un premier mode de réalisation de l'invention ;
- la figure 2 présente schématiquement une vue en perspective de la portion de turbine de la figure 1 ;
- la figure 3 présente une vue partielle en perspective du distributeur de la turbine de la figure 1 ;
- la figure 4 est une vue schématique en coupe d'une portion d'une turbine de turbomachine selon un second mode de réalisation de l'invention.

### Description détaillée de modes de réalisation

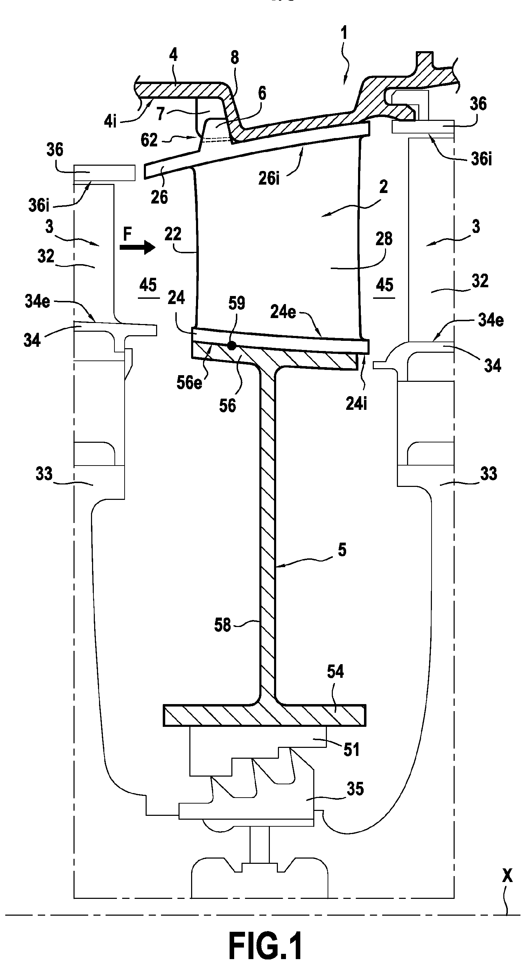

Sur la figure 1 est illustrée schématiquement une vue en coupe d'une turbine de turbomachine selon un premier mode de réalisation de l'invention.

Une turbine 1 haute pression d'une turbomachine, par exemple un turbomoteur aéronautique, telle que montrée partiellement sur la figure 1, comprend une pluralité d'étages distributeurs fixes 2 qui alternent avec des roues mobiles 3 dans le sens d'écoulement, indiqué par une flèche sur la figure 1, du flux gazeux F dans la turbine 1 et qui sont montés dans un carter 4 de turbine.

Chaque roue mobile 3 comprend une pluralité d'aubes 32 ayant une virole intérieure 34, et au moins une pale 38 s'étendant depuis la virole intérieure 34 et liée à celle-ci. Du côté intérieure de la virole intérieure 34, l'aube se prolonge par un pied engagé dans un logement d'un disque 33. Du côté extérieur, le sommet des aubes 32 est en regard d'un matériau abradable porté par un anneau 36 pour assurer l'étanchéité aux sommets des aubes 32.

Dans tout le présent texte, les termes « intérieur » et « extérieur » sont utilisés en référence à la position ou l'orientation par rapport à l'axe de rotation X de la turbine 1.

Les aubes 32 peuvent être des aubes métalliques traditionnelles ou des aubes en matériau CMC obtenues par exemple comme décrit dans les documents WO 2010/061140, WO 2010/116066, WO 2011/080443.

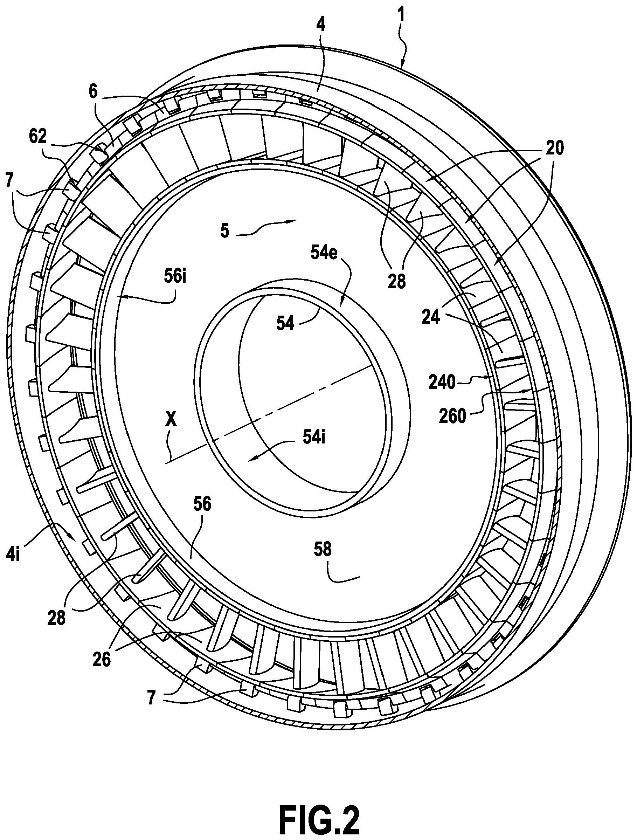

Au moins l'un des étages distributeurs, tel que l'étage distributeur 2 de la figure 1 est formé par réunion de plusieurs secteurs annulaires 20 en matériau CMC comme illustré sur la figure 2 qui présente une vue en perspective de la portion de turbine de la figure 1.

Chaque secteur 20 annulaire de l'étage distributeur 2 comprend une plateforme intérieure 24, une plateforme extérieure 26 et une pale 28 s'étendant entre les plateformes intérieure et extérieure 24 et 26 et solidaires de celles-ci. En variante, plusieurs pales pourraient s'étendre entre les plateformes intérieure et extérieure d'un même secteur de distributeur. Une fois assemblés avec le carter 4 de la turbine 1, les secteurs 20 forment une unique couronne de distributeurs 2 présentant une virole intérieure 240 formée par la juxtaposition des plateformes intérieures 24 des secteurs 20 et une virole extérieure 260 formée par la juxtaposition des plateformes extérieures 26 des secteurs 20.

La virole intérieure 240 de l'étage distributeur 2 présente une surface extérieure 24e et une surface intérieure 24i, et la virole extérieure 260 de l'étage distributeur 2 présente également une surface extérieure 26e et une surface intérieure 26i. Les secteurs 20 formant l'étage distributeur 2, la plateforme intérieure 24 de chaque section 20 présente donc une portion de la surface extérieure 24e et une portion de la surface intérieure 24i, et la plateforme extérieure 26 de chaque secteur 20 présente également une portion de la surface extérieure 26e et une portion de la surface intérieure 26i. La pale 28 de chaque secteur 20 s'étend entre la surface extérieure 24e de la virole intérieure 240 et la surface intérieure 26i de la virole extérieure 260, et plus particulièrement entre la portion de surface extérieure 24e correspondante et la portion de surface intérieure 24i correspondante.

Les surfaces extérieures 24e et 34e des viroles intérieures 240 et 34 de l'étage distributeur 2 et des roues mobiles 3 et les surfaces intérieures 26i et 36i de la virole extérieure 260 de l'étage distributeur 2 et de l'anneau d'étanchéité 36 des roues mobiles 3 délimitent une veine 45 d'écoulement de flux gazeux F dans la turbine 1.

Dans tous le texte, les termes « amont » et « aval » sont utilisés en référence au sens d'écoulement de flux gazeux F dans la veine 45 indiqué par une flèche.

Comme cela est illustré sur les figures 1 et 2, dans ce premier mode de réalisation, la turbine 1 comprend un anneau métallique 5 présentant une section en forme de I. L'anneau métallique 5 comprend ainsi une virole intérieure 54, une virole extérieure 56 et un anneau plat 58 s'étendant entre les viroles intérieure et extérieure 54 et 56 et solidaire de celles-ci.

Dans d'autres modes de réalisation, l'anneau métallique 5 peut présenter d'autres formes.

La virole intérieure 54 de l'anneau métallique 5 présente une surface extérieure 54e et une surface intérieure 54i, et la virole extérieure 56 présente également une surface extérieure 56e et une surface intérieure 56i. L'anneau plat 58 s'étend entre la surface extérieure 54e de la virole intérieure 54 et la surface intérieure 56i de la virole extérieure 56.

La surface extérieure 56e de l'anneau métallique 5 est en appui sur la surface intérieure 24i de la virole intérieure 240 du distributeur 2 via un joint fil 59 et exerce une force radiale vers le carter 4 sur le distributeur 2. Le joint fil 59 est ainsi pris en étau entre la surface extérieure 56e de l'anneau métallique 5 et la surface intérieure 24i de la virole intérieure 240 de l'étage distributeur 2, et assure l'étanchéité entre ces deux éléments.

L'anneau métallique 5 supporte en outre sur la surface intérieure 54i de la virole intérieure 54 un matériau abradable 51 en regard de léchettes 35 portées par le disque 33 pour assurer l'étanchéité de la veine 45 du côté intérieur.

L'anneau métallique 5 peut être formé de secteurs juxtaposés constituant chacun un cartouche d'abradable, ou peut être formé en une seule pièce comme illustré sur la figure 2.

Le diamètre de la surface de la virole extérieure 56 de l'anneau métallique 5 qui est en contact avec la virole intérieure 240 de l'étage distributeur 2, c'est-à-dire le diamètre de la surface extérieure 56e de la virole extérieure 56 de l'anneau métallique 5, est supérieur au diamètre de la surface de la virole intérieure 240 de l'étage distributeur 2 pour chaque position axiale depuis l'amont jusque l'aval de l'anneau métallique 5 et de l'étage distributeur 2, c'est-à-dire supérieur au diamètre de la surface intérieure 24i de la virole intérieure 240 de l'étage distributeur 2.

L'étage distributeur 2 est ainsi maintenu en compression entre le carter 4 et l'anneau métallique 5.

L'assemblage de la turbine 1 est réalisé en positionnant tout d'abord les secteurs 20 de l'étage distributeur 2 contre une surface intérieure 4i du carter 4 sur toute sa périphérie intérieure, puis en introduisant l'anneau métallique 5 refroidi à une température permettant de réduire son diamètre à une dimension inférieure au diamètre de la surface intérieure 24i de la virole intérieure 240 de l'étage distributeur 2 pour une position axiale donnée. L'anneau métallique 5 est ensuite remis à température ambiante et maintenu en position jusqu'à ce qu'il retrouve son diamètre initial et applique une force radiale permettant de maintenir l'étage distributeur 2 en appui contre le carter 4.

Lors de l'introduction de l'anneau métallique 5 dans la turbine 1, les secteurs 20 de l'étage distributeur 2 sont maintenus immobiles en position à l'aide d'un outil spécifique. L'outil spécifique peut se présenter par exemple sous la forme d'un anneau possédant des dents en saillie dans une direction parallèle à l'axe de rotation X de la turbine 1 de sorte que les dents puissent être introduites dans les espaces entre les pales 28 de l'étage distributeur 2 et appliquer une force radiale contre les plateformes extérieures 26 des secteurs 20 formant la virole extérieure 260 de l'étage distributeur 2 pour les maintenir en appui contre le carter 4.

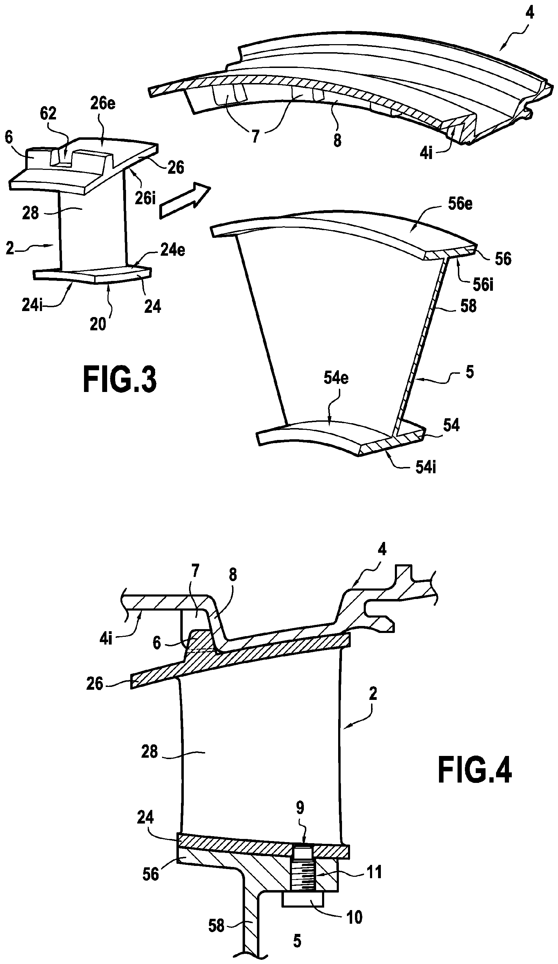

Sur la figure 3 est illustrée une vue éclatée partielle en perspective de l'anneau métallique 5, d'un secteur 20 de l'étage distributeur 2, et du carter 4.

Comme cela est illustré sur les figures 1 à 3, la virole extérieure 260 de l'étage distributeur 2 comprend une nervure annulaire 6 présentant au moins un créneau 62 par secteur 20. La nervure annulaire 6 s'étend sur la surface extérieure 26e de la virole extérieure 260 de l'étage distributeur 2.

En regard de chaque créneau 62 de la nervure annulaire 6, le carter 4 comprend sur sa surface intérieure 4i une dent 7 s'étendant en saillie vers l'axe de rotation X de la turbine 1, c'est-à-dire vers l'étage distributeur 2. Les dents 7 sont réparties sur toute la circonférence de la surface intérieure 4i du carter 4 de manière à avoir une dent 7 en regard de chaque créneau 62 de la nervure annulaire 6 de l'étage distributeur 2.

En variante, le carter pourrait comprendre une seule dent, ou même quelques dents, ou encore des pions, apte(s) à coopérer avec un (ou plusieurs) des créneaux 62 de la nervure annulaire 6.

Les dents 7 et les créneaux 62 sont conformés pour coopérer ensemble de manière à empêcher tout mouvement de rotation de l'étage distributeur 2 par rapport au carter 4 qui est lui-même immobile.

Comme illustré sur les figures 1 à 3 également, le carter 4 comprend un épaulement 8 en saillie vers l'étage distributeur 2. L'épaulement 8 et la nervure annulaire 6 de la virole extérieure 260 de l'étage distributeur 2 sont dimensionnés et conformés pour coopérer ensemble de sorte que l'épaulement 8 forme une première butée axiale contre laquelle la nervure 6 s'appuie, empêchant ainsi tout mouvement axial dans le sens du flux gazeux F indiqué par la flèche sur la figure 1.

La surface extérieure 56e de la virole extérieure 56 de l'anneau métallique 5 présente en outre dans l'exemple illustré ici une pente négative dans le sens d'écoulement du flux gazeux F, indiqué par la flèche sur la figure 1, dans la veine d'écoulement 45. Cette pente permet de fournir une seconde butée axiale à l'anneau métallique 5 empêchant tout mouvement axial dans un sens opposé au flux gazeux F indiqué par la flèche sur la figure 1.

L'efficacité de la seconde butée axiale est améliorée par la pente positive présentée par la surface intérieure 4i du carter 4 s'étendant depuis l'épaulement 8 jusqu'à une portion en aval de l'épaulement 8.

Dans un second mode de réalisation illustré sur la figure 4, la virole intérieure 240 de l'étage distributeur 2 présente un orifice 9 et l'anneau métallique 5 comprend une vis 10 filetée sur une partie seulement de sa tige et un trou taraudé 11, le trou taraudé 11 de l'anneau métallique 5 et l'orifice 9 de la virole intérieure 240 de l'étage distributeur 2 étant alignés.

La vis 10 est vissée dans le trou taraudé 11 jusqu'à ce que l'extrémité non filetée de la vis 10 soit insérée dans l'orifice 9 de la virole intérieure 240 de l'étage distributeur2. Un simple pion fretté pourrait également suffire. Dans ce cas, le trou 11 ne serait pas taraudé.

La vis 10 formant un pion à son extrémité libre insérée dans l'étage distributeur 2 permet de fournir aussi bien une butée axiale qu'un moyen de blocage en rotation de l'anneau métallique 5.

Dans le second mode de réalisation, la présence de l'orifice 9 et de la vis 10 permet de s'affranchir éventuellement des pentes négatives et positives de l'étage distributeur 2, étant donné que les fonctions remplies par ces éléments sont remplies par l'ensemble formé par la vis 10 et l'orifice 9.

L'invention fournit ainsi une turbine de turbomachine comprenant un étage distributeur de turbine en CMC dont le montage est simplifié et adapté pour fournir un ensemble rigide avec une étanchéité améliorée.

## Revendications

1. Turbine (1) de turbomachine comprenant un carter (4), un étage distributeur (2) de turbine (1) et un anneau métallique (5) support de matériau abradable (51), l'étage distributeur (2) de turbine (1) étant en matériau composite à matrice céramique et comprenant une pluralité de secteurs (20) annulaires formant une couronne présentant une virole intérieure (240) et une virole extérieure (260), chaque secteur (20) annulaire ayant une plateforme intérieure (24) formant une partie de la virole intérieure (240), une plateforme extérieure (26) formant une partie de la virole extérieure (260), et au moins une pale (28) s'étendant entre la plateforme extérieure (26) et la plateforme intérieure (24) et solidaire de celles-ci, et l'anneau métallique (5) comprenant au moins un secteur au moins partiellement annulaire,
**caractérisé en ce que** l'anneau métallique (5) présente une surface externe (56e) en contact avec la surface (24i) de la virole intérieure (240) de l'étage distributeur (2) opposée à la surface (24e) depuis laquelle s'étendent les pales (28), l'anneau métallique (5) présentant à sa surface externe (56e) un diamètre externe supérieur au diamètre de la virole intérieure (240) de l'étage distributeur (2) de turbine (1) de sorte que l'étage distributeur (2) soit maintenu en compression entre le carter (4) et l'anneau métallique (5).

2. Turbine (1) selon la revendication 1, dans laquelle la virole extérieure (26) comprend une nervure annulaire (6) comportant au moins un créneau (62) et s'étendant sur une surface (26e) de la virole extérieure (26) en regard du carter (4), et le carter (4) comprend au moins une dent (7) s'étendant en saillie depuis une surface circonférentielle intérieure (4i) du carter (4) vers l'étage distributeur (2) et disposée en regard d'un créneau (62) de la nervure annulaire (6) de l'étage distributeur (2) de sorte que ladite au moins une dent (7) du carter (4) coopère avec ledit au moins un créneau (62) de la nervure annulaire (6) de l'étage distributeur (2) pour bloquer en rotation l'étage distributeur (2).

3. Turbine (1) selon la revendication 2, dans laquelle le carter (4) comprend en outre un épaulement (8) en saillie vers l'étage distributeur (2), l'épaulement (8) du carter (4) et la nervure annulaire (6) de la virole extérieure (260) de l'étage distributeur (2) étant dimensionnés pour que l'épaulement (8) du carter (4) forme une butée contre laquelle la nervure annulaire (6) s'appuie.

4. Turbine (1) selon l'une des revendications 1 à 3, comprenant une veine d'écoulement (45) formée par le passage entre la virole extérieure (260) et la virole intérieure (240) de l'étage distributeur (2) et à l'intérieur de laquelle s'écoule un flux gazeux (F) dans un sens d'écoulement, une surface intérieure (24i) de ladite virole intérieure (240) et ladite surface externe (56e) de l'anneau métallique (5) présentant toutes deux une pente négative dans le sens d'écoulement du flux gazeux (F).

5. Turbine selon l'une des revendications 1 à 4, dans laquelle la virole intérieure (240) de l'étage distributeur (2) présente un orifice (9) ou une encoche et l'anneau métallique (5) comprend un ergot en saillie de la surface externe (56e) apte à coopérer avec l'encoche ou l'orifice (9) de la virole intérieure (240) pour bloquer l'anneau métallique (5) axialement et en rotation, l'ergot étant formé par une clavette ou un pion ou une vis (10) formant un pion en saillie de la surface externe (56e).

6. Turbine (1) selon l'une des revendications 1 à 5, dans laquelle l'anneau métallique (5) présente une section en I.

7. Turbine (1) selon l'une des revendications 1 à 6, comprenant en outre au moins un joint disposé entre la virole intérieure (240) de l'étage distributeur (2) et la surface externe (56e) de l'anneau métallique (5).

8. Turbine (1) selon l'une des revendications 1 à 7, comprenant en outre au moins un joint disposé entre la virole extérieure (260) de l'étage distributeur (2) et la surface interne (4i) du carter (4).

9. Turbine selon l'une des revendications 1 à 8, dans laquelle l'anneau métallique (5) est réalisé en une seule pièce.

10. Turboréacteur comprenant au moins une turbine (1) de turbomachine selon l'une des revendications 1 à 9, dans lequel au moins une desdites au moins une turbine (1) est une turbine haute pression ou basse pression.

11. Aéronef comprenant au moins un turboréacteur selon la revendication 10.

## Patentansprüche

1. Turbine (1) einer Turbomaschine, umfassend ein Gehäuse (4), eine Leitradstufe (2) der Turbine (1) und einen Abriebmaterial (51) tragenden Metallring (5), wobei die Leitradstufe (2) der Turbine (1) aus Keramikmatrix-Verbundwerkstoff besteht und eine Vielzahl von Ringsektoren (20) umfasst, die einen Kranz bilden, der einen Innenring (240) und einen Außenring (260) aufweist, wobei jeder Ringsektor (20) eine innere Plattform (24), die einen Teil des Innenrings (240) bildet, eine äußere Plattform (26), die einen Teil des Außenrings (260) bildet, und wenigstens eine Schaufel (28) aufweist, die sich zwischen der äußeren Plattform (26) und der inneren Plattform (24) erstreckt und mit diesen fest verbunden ist, und wobei der Metallring (5) wenigstens einen wenigstens teilweise ringförmigen Sektor umfasst,
**dadurch gekennzeichnet, dass** der Metallring (5) eine Außenfläche (56e) aufweist, die in Kontakt mit der Oberfläche (24i) des Innenrings (240) der Leitradstufe (2) ist, welche der Oberfläche (24e) gegenüberliegt, von der aus sich die Schaufeln (28) erstrecken, wobei der Metallring (5) an seiner Außenfläche (56e) einen Außendurchmesser aufweist, der größer ist als der Durchmesser des Innenrings (240) der Leitradstufe (2) der Turbine (1), so dass die Leitradstufe (2) zwischen dem Gehäuse (4) und dem Metallring (5) druckbeaufschlagt gehalten wird.

2. Turbine (1) nach Anspruch 1, bei der der Außenring (26) eine ringförmige Rippe (6) aufweist, die wenigstens eine Nische (62) aufweist und sich über eine Oberfläche (26e) des Außenrings (26) gegenüber dem Gehäuse (4) erstreckt, und das Gehäuse (4) wenigstens einen Zahn (7) aufweist, der sich von einer inneren Umfangsfläche (4i) des Gehäuses (4) zu der Leitradstufe (2) vorspringend erstreckt und gegenüber einer Nische (62) der ringförmigen Rippe (6) der Leitradstufe (2) angeordnet ist, so dass der wenigstens eine Zahn (7) des Gehäuses (4) mit der wenigstens einen Nische (62) der ringförmigen Rippe (6) der Leitradstufe (2) zusammenwirkt, um die Leitradstufe (2) gegen ein Drehen festzulegen.

3. Turbine (1) nach Anspruch 2, bei der das Gehäuse (4) ferner eine in Richtung der Leitradstufe (2) vorspringende Schulter (8) aufweist, wobei die Schulter (8) des Gehäuses (4) und die ringförmige Rippe (6) des Außenrings (260) der Leitradstufe (2) dimensioniert sind, damit die Schulter (8) des Gehäuses (4) einen Anschlag bildet, an dem sich die ringförmige Rippe (6) abstützt.

4. Turbine (1) nach einem der Ansprüche 1 bis 3, umfassend einen Strömungskanal (45), der durch den Durchgang zwischen dem Außenring (260) und dem Innenring (240) der Leitradstufe (2) gebildet ist und innerhalb dessen ein Gasstrom (F) in einer Strömungsrichtung strömt, wobei eine Innenfläche (24i) des Innenrings (240) und die Außenfläche (56e) des Metallrings (5) beide eine negative Neigung in der Strömungsrichtung des Gasstroms (F) aufweisen.

5. Turbine nach einem der Ansprüche 1 bis 4, bei der der Innenring (240) der Leitradstufe (2) eine Öffnung (9) oder eine Nut aufweist und der Metallring (5) einen von der Außenfläche (56e) vorspringenden Zapfen aufweist, der geeignet ist, mit der Nut oder der Öffnung (9) des Innenrings (240) zusammenzuwirken, um den Metallring (5) axial und gegen ein Drehen festzulegen, wobei der Zapfen durch einen Keil oder einen Stift oder eine Schraube (10), die einen von der Außenfläche (56e) vorspringenden Stift bildet, gebildet ist.

6. Turbine (1) nach einem der Ansprüche 1 bis 5, bei der der Metallring (5) einen I-förmigen Querschnitt aufweist.

7. Turbine (1) nach einem der Ansprüche 1 bis 6, ferner umfassend wenigstens eine Dichtung, die zwischen dem Innenring (240) der Leitradstufe (2) und der Außenfläche (56e) des Metallrings (5) angeordnet ist.

8. Turbine (1) nach einem der Ansprüche 1 bis 7, ferner umfassend wenigstens eine Dichtung, die zwischen dem Außenring (260) der Leitradstufe (2) und der Innenfläche (4i) des Gehäuses (4) angeordnet ist.

9. Turbine nach einem der Ansprüche 1 bis 8, bei der der Metallring (5) einstückig ausgebildet ist.

10. Turbostrahltriebwerk, umfassend wenigstens eine Turbine (1) einer Turbomaschine nach einem der Ansprüche 1 bis 9, bei dem wenigstens eine der wenigstens einen Turbine (1) eine Hochdruck- oder Niederdruckturbine ist.

11. Luftfahrzeug, das wenigstens ein Turbostrahltriebwerk nach Anspruch 10 umfasst.

## Claims

1. A turbine engine turbine (1) comprising a casing (4), a turbine nozzle stage (2), and a metal ring (5) for supporting abradable material (51), the turbine nozzle stage (2) being made of ceramic matrix composite material and comprising a plurality of annular sectors (20) forming an annulus presenting an inner shroud (240) and an outer shroud (260), each annular sector (20) having an inner platform (24) forming a portion of the inner shroud (240), an outer platform (26) forming a portion of the outer shroud (260), and at least one airfoil (28) extending between the outer platform (26) and the inner platform (24) and secured thereto, and the metal ring (5) comprising at least one sector that is at least partially annular; the turbine being **characterized in that** the metal ring (5) presents an outer surface (56e) in contact with the surface (24i) of the inner shroud (240) of the nozzle stage (2) opposite from the surface (24e) from which the airfoils (28) extend, the metal ring (5) presenting an outside diameter at its outer surface (56e) that is greater than the diameter of the inner shroud (240) of the turbine nozzle stage (2) such that the nozzle stage (2) is held in compression between the casing (4) and the metal ring (5).

2. A turbine (1) according to claim 1, wherein the outer shroud (26) includes an annular rib (6) having at least one crenellation (62) and extending from a surface (26e) of the outer shroud (26) that faces the casing (4), and the casing (4) includes at least one tooth (7) projecting from an inner circumferential surface (4i) of the casing (4) towards the nozzle stage (2) and arranged facing a crenellation (62) of the annular rib (6) of the nozzle stage (2) in such a manner that said at least one tooth (7) of the casing (4) cooperates with said at least one crenellation (62) in the annular rib (6) of the nozzle stage (2) in order to prevent the nozzle stage (2) from moving in rotation.

3. A turbine (1) according to claim 2, wherein the casing (4) further includes a shoulder (8) projecting towards the nozzle stage (2), the shoulder (8) of the casing (4) and the annular rim (6) of the outer shroud (260) of the nozzle stage (2) being dimensioned so that the shoulder (8) of the casing (4) forms an abutment against which the annular rim (6) bears.

4. A turbine (1) according to any one of claims 1 to 3, including a flow passage (45) formed by the passage between the outer shroud (260) and the inner shroud (240) of the nozzle stage (2) and within which there flows a gas stream (F) in a flow direction, an inner surface (24i) of said inner shroud (240) and said outer surface (56e) of the metal ring (5) both presenting negative slopes in the flow direction of the gas stream (F).

5. A turbine according to any one of claims 1 to 4, wherein the inner shroud (240) of the nozzle stage (2) presents an orifice (9) or a notch, and the metal ring (5) includes a lug projecting from the outer surface (56e) and suitable for co-operating with the notch or orifice (9) in the inner shroud (240) so as to prevent the metal ring (5) from moving axially or in rotation, the lug being formed by a pin or a peg or a screw (10) forming a peg projecting from the outer surface (56e).

6. A turbine (1) according to any one of claims 1 to 5, wherein the metal ring (5) presents an I-shaped section.

7. A turbine (1) according to any one of claims 1 to 6, further including at least one gasket arranged between the inner shroud (240) of the nozzle stage (2) and the outer surface (56e) of the metal ring (5).

8. A turbine (1) according to any one of claims 1 to 7, further including at least one gasket arranged between the outer shroud (260) of the nozzle stage (2) and the inner surface (4i) of the casing (4).

9. A turbine according to any one of claims 1 to 8, wherein the metal ring (5) is made as a single piece.

10. A turbojet including at least one turbine engine turbine (1) according to any one of claims 1 to 9, wherein at least one of said at least one turbine (1) is a high-pressure turbine or a low-pressure turbine.

11. An aircraft including at least one turbojet according to claim 10.
